# EUROPEAN PATENT APPLICATION

(11) **EP 4 693 705 A1**
(43) Date of publication of application: **11.02.2026**
(21) Application number: 24785335.1
(22) Date of filing: 05.04.2024
(51) Int. Cl.: H01M 50/543, H01M 50/552, H01M 50/564, H01M 50/102

(54) **BATTERY CELL**

(30) Priority: 06.04.2023 KR 20230045068
(71) Applicant: SK On Co., Ltd., Seoul 03161 (KR)
(72) Inventor: SHIN, Jae Sik, Daejeon 34124 (KR); JU, Seung Hoon, Daejeon 34124 (KR); BYUN, Jae Gyu, Daejeon 34124 (KR); SEO, Gi Jeong, Daejeon 34124 (KR)
(74) Representative: Prüfer & Partner mbB Patentanwälte · Rechtsanwälte
(86) International application number: PCT/KR2024/004551
(87) International publication number: WO 2024/210638

(57) **Abstract**

The battery cell of the present disclosure comprises a case body having an open side and at least one cap plate coupled to the case body to close the open side, an electrode assembly accommodated within the case, and a terminal assembly coupled to the at least one cap plate. The terminal assembly includes a current collector electrically connected to the electrode assembly with a through hole formed therein and a terminal including a terminal head, a terminal pin connected to the terminal head, and a protrusion connected to both the terminal head and the terminal pin, wherein the current collector is pressed toward the protrusion while the terminal pin is inserted into the through hole, thereby being joined to the terminal.

## Description

### [Field]

This disclosure relates to a battery cell, specifically a battery cell including a terminal.

### [Background technology]

A battery cell may include an electrode assembly, a current collector connected to the electrode assembly, and a terminal connecting the current collector to an external device. The electrode assembly is a secondary battery that repeatedly performs charging and discharging.

The terminal and the current collector may be joined by welding. Here, the problem exists that the non-welded portion or the non-joined portion has high electrical resistance, making the electrical connection vulnerable. In this case, the flow of current may concentrate at the welded portion, which is a region with relatively low electrical resistance, potentially causing heat to concentrate at the welded portion.

### [Detailed Description of the Invention]

### [Technical Problem]

First, the present disclosure aims to provide a battery cell with improved stability.

Second, the present disclosure aims to increase the contact area between the current collector and the terminal.

Third, the present disclosure aims to reduce electrical resistance between the current collector and the terminal and minimize heat generation.

Fourth, the present disclosure aims to mechanically join the current collector and the terminal instead of using conventional welding methods.

Meanwhile, the battery cell according to this disclosure may be widely applied in the fields of electric vehicles, battery charging stations, energy storage systems, and other green technologies such as photovoltaics and wind power that utilize battery cells. Furthermore, the battery cell according to this disclosure may be used in eco-friendly mobility, including electric vehicles and hybrid vehicles, to prevent climate change by suppressing air pollution and greenhouse gas emissions.

### [Technical solutions]

A battery cell according to an embodiment of the present disclosure may comprise: a case body having an open side and at least one cap plate coupled to the case body to close the open side; an electrode assembly accommodated within the case; and a terminal assembly coupled to the at least one cap plate; wherein the terminal assembly may include: a current collector electrically connected to the electrode assembly and having a through hole formed therein; a terminal head positioned opposite the direction in which the cap plate is located relative to the current collector; a terminal pin extending from the terminal head toward the cap plate and inserted into the through hole; and a protrusion extending from the terminal head toward the cap plate, connected to an outer surface of the terminal pin, and contacting the current collector together with at least a portion of the terminal head.

In an embodiment, the current collector, after the terminal pin is inserted through the through hole, may be pressed toward the protrusion comes into contact with the protrusion and the terminal head.

In an embodiment, the length of the protrusion extending toward the cap plate relative to the terminal head may be less than the vertical height of the terminal head.

In an embodiment, the protrusion may be provided in a plurality, and the plurality of the protrusions may be arranged at preset intervals along the circumference of the terminal pin.

In an embodiment, the terminal head may include a head center portion connected to the terminal pin, an inner connection portion connected to the outer end of the head center portion, and an outer connection portion connected to the outer end of the inner connection portion, and the protrusion may be arranged in a plurality on the inner connection portion.

In an embodiment, the shape of the vertical cross-section of the protrusion may be triangular or rounded triangular.

In an embodiment, the protrusion may include a first protrusion and a second protrusion adjacent to each other, and the angle between adjacent edges of the first protrusion and the second protrusion in the vertical cross-section of the terminal may be greater than an angle between a first line connecting the center point of the terminal and the base peak of the first protrusion and a second line connecting the center point of the terminal and the top peak of the first protrusion in the vertical cross-section of the terminal.

In an embodiment, the shape of the vertical cross- section of the terminal pin may be circular.

In an embodiment, the terminal pin may include a pin member connected to the top of the head center portion, and a dog point connected to the top of the pin member and protruding vertically to reduce the horizontal length.

In an embodiment, the terminal pin and terminal head may be provided in a cylindrical shape, and the through hole may be provided in a circular shape corresponding to the shape of the terminal pin, and the outer diameter of the terminal head may be equal to or greater than the inner diameter of the through hole.

In an embodiment, the current collector may further include a board-shaped plate including the through hole and a periphery of the through hole located within a predetermined reference distance from the through hole on the plate, wherein the periphery of the through hole may protrude toward the cap plate relative to the plate when the terminal head contacts with the plate.

In an embodiment, the periphery of the through hole may protrude toward the cap plate relative to the plate when the terminal head contacts with the plate.

In an embodiment, the terminal pin may be provided in a cylindrical shape, and the protrusion may be located within an area at or below the reference distance from the terminal head relative to the terminal pin.

In an embodiment, the periphery of the through hole may be deformed from a first state in which the current collector forms a plane with the plate before pressing the protrusion to a second state in which at least a portion of the current collector protrudes toward the cap plate when the current collector presses the protrusion.

In an embodiment, a free end of the terminal pin may be located above the position of the cap plate relative to the current collector.

In an embodiment, the battery cell may further comprise: an insulator for spacing the current collector, the terminal head, and the terminal pin from the electrode assembly and the case.

A battery assembly according to another embodiment of the present disclosure may comprise the battery cell and an accommodating space for receiving the battery cell.

### [Effect]

According to an embodiment of the present disclosure, a battery cell with improved stability may be provided.

According to an embodiment of the present disclosure, the electrical resistance of the terminal may be improved, and the thermal behavior may be improved.

According to an embodiment of the present disclosure, the terminal and the current collector may be joined using a mechanical method instead of welding.

According to an embodiment of the present disclosure, the manufacturing process of a battery cell may be simplified and the manufacturing cost may be reduced.

### [Description of the drawing]

FIG. 1a is a drawing illustrating a battery cell according to an embodiment. FIG. 1b is a drawing illustrating a terminal assembly according to an embodiment.
Fig. 2a and Fig. 2b are drawings illustrating the connection between the current collector and the terminal according to an embodiment.
Fig. 3a and Fig. 3b are cross-sectional views illustrating the connection between the current collector and the terminal according to an embodiment.
FIG. 4 is a plan view of the terminal according to an embodiment.

### [Embodiments]

The structural or functional descriptions of the embodiments disclosed in this specification or application are provided merely as examples to illustrate embodiments of the technical concept of the present invention. Embodiments of the technical concept of the present invention may be implemented in various forms beyond the embodiments disclosed in this specification or application. and the technical concept of the present invention should not be interpreted as being limited to the embodiments described herein or in the application.

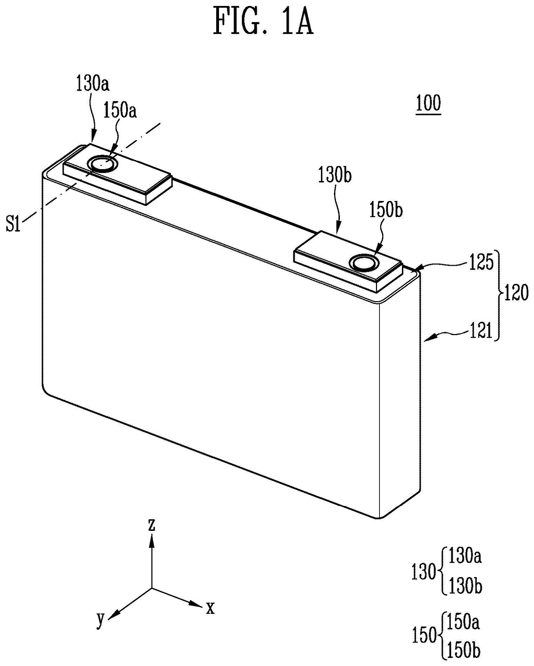

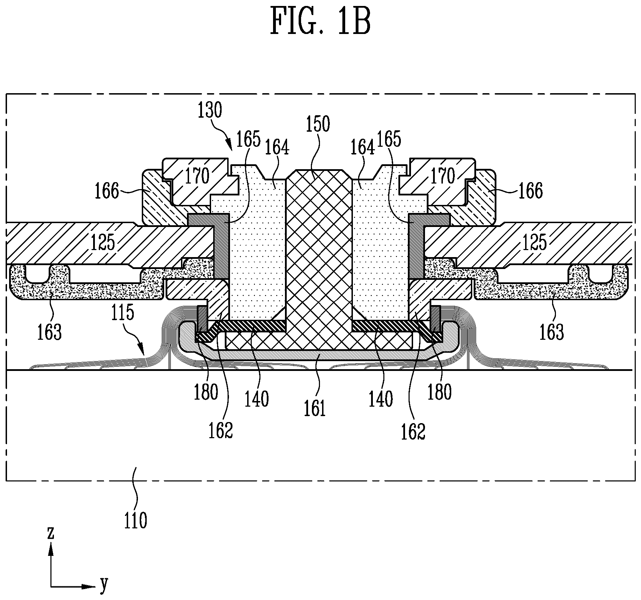

FIG. 1a is a drawing illustrating a battery cell according to an embodiment. FIG. 1b is a drawing illustrating a terminal assembly according to an embodiment. FIG. 1b shows a cross-section S1 of the terminal assembly of FIG. 1a.

Referring to FIGS. 1a and 1b, a battery cell 100 according to an embodiment may include an electrode assembly 110, a case 120, and a terminal assembly 130. For example, the battery cell 100 may be a lithium-ion battery, but is not limited thereto and may be modified to various types of batteries.

The electrode assembly 110 may include electrodes, a separator, and lead tabs 115. The electrodes may include a positive electrode and a negative electrode. The separator may be an insulator having electrical insulating properties. The lead tabs 115 may include a positive electrode lead tab and a negative electrode lead tab. The positive electrode lead tab may be electrically connected to the positive electrode, and the negative electrode lead tab may be electrically connected to the negative electrode. For example, the electrode assembly 110 may be stacked in which electrodes (e.g., a negative electrode and a positive electrode) are arranged on both sides of the separator, and lead tabs 115 are connected to the electrodes.

The electrode assembly 110 may be placed within an accommodating space of a case 120. The electrode assembly 110 may further include an electrolyte. For example, the electrolyte may be a material that enables the movement of lithium ions. The electrolyte may be a material in a liquid or solid state.

The case 120 may be a structure forming an accommodating space internally. For example, the case 120 may have a shape such as a hollow hexahedron or cylinder. The material of the case 120 may be aluminum or an aluminum alloy, but is not limited thereto and may be modified and implemented using various materials.

The case 120 may include a case body 121 and at least one cap plate 125. For example, the cap plate 125 may be one or two.

The case body 121 may form an accommodating space with at least one open side.

The cap plate 125 may be coupled to the case body 121. For example, after an electrode assembly 110 is placed within the accommodating space inside the case body 121, the cap plate 125 may be coupled to the case body 121 to seal the accommodating space. In this case, the cap plate 125 may be coupled to the case body 121 using coupling methods such as bolts, welding, clamps, or protrusions.

The cap plate 125 can be coupled to the terminal assembly 130. For example, a hole can be formed in the cap plate 125. The terminal assembly 130 can be inserted into the hole in the cap plate 125, thereby coupling the cap plate 125 to the terminal assembly 130.

In an embodiment, the case body 121 may form an accommodating space with open side. For example, the open side may be the top surface. The electrode assembly 110 may be inserted through the top surface and positioned within the accommodating space. Then, one cap plate 125 may be coupled to the case body 121 to seal the open top surface of the accommodating space. In this case, two terminal assemblies 130 may be coupled to one cap plate 125.

In another embodiment, the case body 121 may form an accommodating space with two open sides. For example, the two open sides may be the top surface and the bottom surface. The electrode assembly 110 may be inserted through the top surface or the bottom surface and positioned within the accommodating space. Furthermore, two cap plates 125 may be coupled to the case body 121 to seal the open top and bottom surfaces of the accommodating space. In this case, one terminal assembly 130 may be coupled to one cap plate 125.

The terminal assembly 130 is a structure for electrically connecting the electrode assembly 110 to an external device. The terminal assembly 130 may be distinguished as either a first terminal assembly 130a or a second terminal assembly 130b. Depending on the polarity of the lead tab 115 of the electrode assembly 110, one of the first terminal assembly and the second terminal assembly 130b may be a positive terminal assembly, and the other may be a negative terminal assembly. Similarly, the terminal 150 is distinguished as either the first terminal 150a or the second terminal 150b, and one of the first terminal 150a and the second terminal 150b may be the positive terminal, while the other may be the negative terminal.

The terminal assembly 130 may include a current collector 140 and a terminal 150.

The current collector 140 may be electrically connected to the electrode assembly 110. For example, the current collector 140 may be electrically connected to the lead tab 115 by contacting the lead tab 115.

The terminal 150 may be electrically connected to the current collector 140. Specifically, the terminal 150 may be in contact with the current collector 140, thereby providing a direct electrical connection. The current collector 140 and the terminal 150 may be conductive metals.

The terminal 150 may be electrically connected to an external device. The terminal 150 may be electrically connected to the electrode assembly 110 via the current collector 140. That is, the external device may be electrically connected to the electrode assembly 110 via the terminal 150 and the current collector 140. Here, the external device may be various devices such as another battery cell, a sensing device, or a battery management system.

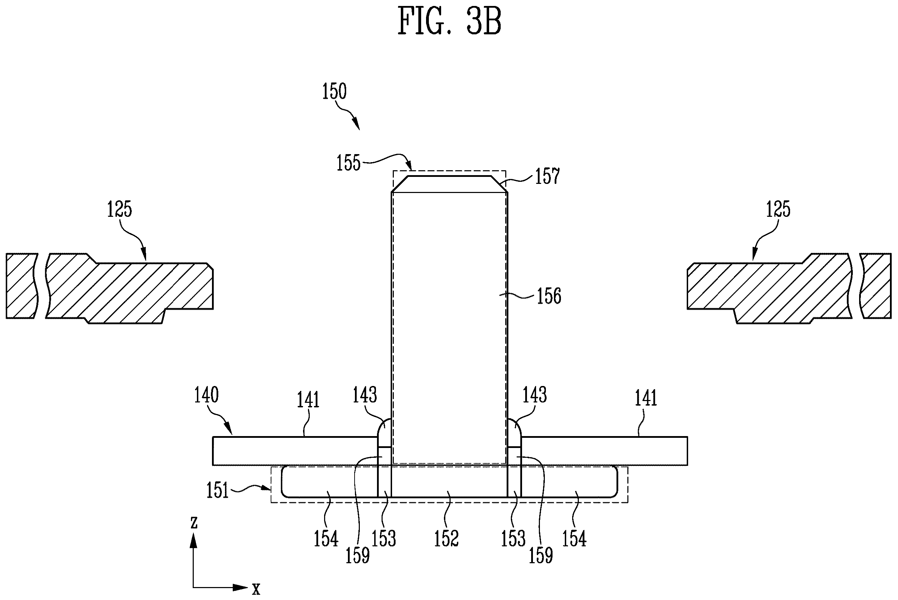

Meanwhile, referring to FIGS. 1b and 3b, the relative positions of the cap plate 125, the current collector 140, and the terminal 150 may be understood. Therefore, it may be seen that the terminal 150 contacts the current collector 140 but is spaced apart from the cap plate 125.

For this, the battery cell 100 may further include insulators 161, 163, 165, 166 for spacing between the terminal assembly 130 and the case 120, and between the terminal assembly 130 and the electrode assembly 120.

In an embodiment, the terminal assembly 130 may further include a first insulator 161, an insulating socket 162, a second insulator 163, a rivet 164, a third insulator 165, a fourth insulator 166, a terminal plate 170, and a welded portion 180.

For example, the first insulator 161, insulating socket 162, second insulator 163, third insulator 165, and fourth insulator 166 may be structures possessing electrical insulating properties or high resistance characteristics. For example, the rivet 164, terminal plate 170, and welded portion 180 may be structures having electrical conductivity.

The first insulator 161 may be positioned between the electrode assembly 110 and the terminal 150. The side end of the first insulator 161 may be positioned between the lead tab 115 of the electrode assembly 110 and the current collector 140. The first insulator 161 may block direct electrical connection between the lead tab 115 of the electrode assembly 110 and the terminal 150.

The insulating socket 162 is a structure for securing the rivet 164. The insulating socket 162 and the second insulator 163 can block direct electrical connection between the lead tab 115 of the electrode assembly 110 and the cap plate 125.

The rivet 164 can secure the current collector 140 and the terminal 150. For example, the rivet 164 can be inserted into a space within the upper cavity of the current collector 140, between the outer side of the terminal pin of the terminal 150 and the inner side of the insulating socket 162.

A third insulator 165 may block direct electrical connection between the rivet 164 and the cap plate 125. For example, the third insulator 165 may be positioned between the rivet 164 and the cap plate 125. A fourth insulator 166 may block a direct electrical connection between the cap plate 125 and the terminal plate 170. For example, the fourth insulator 166 may be positioned between the cap plate 125 and the terminal plate 170.

A welded portion 180 may be formed between the lead tab 115 and the current collector 140 via welding. The welded portion 180 may electrically connect the lead tab 115 and the current collector 140 to each other.

Hereinafter, the method and structure by which the current collector 140 is joined to the terminal 150 will be described in detail with reference to the attached drawings.

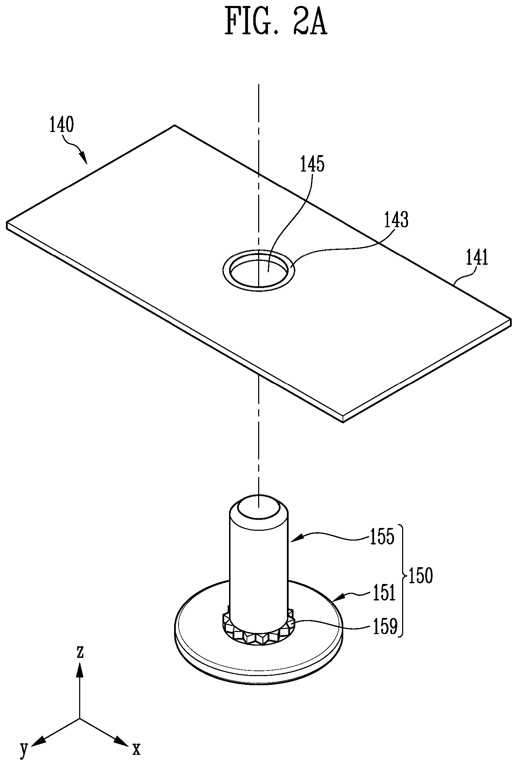

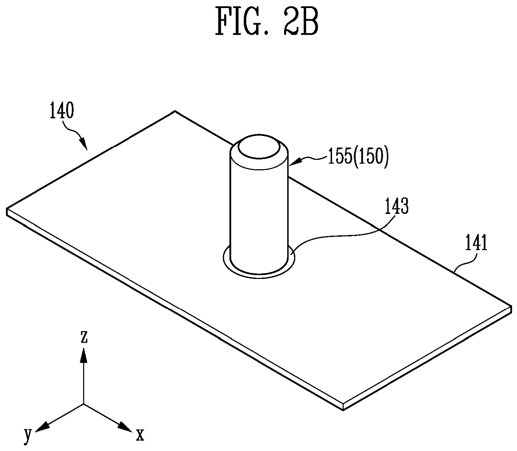

Fig. 2a and Fig. 2b are drawings illustrating the connection between the current collector and the terminal according to an embodiment. FIG. 2a shows the state before the current collector and the terminal are joined with each other, and FIG. 2b shows the state after the current collector and the terminal are joined with each other. Referring to FIGS. 2a and 2b, the current collector 140 may be joined to the terminal 150 by a mechanical method. For example, the current collector 140 can be crimped to the terminal 150 while the terminal 150 is inserted into the through hole 145, thereby joining it to the terminal 150.

Specifically, a through hole 145 may be formed in the current collector 140. That is, the current collector 140 may include a through hole 145. The through hole 145 is an area for insertion of the terminal 150 and may be an open area.

In an embodiment, the current collector 140 may include a plate 141 and a through-hole periphery 143. The plate 141 may be an area contacting the terminal head 151. The through-hole periphery 143 may be the area surrounding the through hole 145. For example, the periphery 143 of the through hole 145 may be defined as the area within a predetermined distance from the through hole 145. The shape of the through hole 145 may be the same as the shape of the terminal pin 155. For example, the shape of the through hole 145 may be circular, but this is only one embodiment and may be modified into various shapes. Preferably, to reduce stress concentration and maximize contact, the terminal pin 155 is cylindrical, and the through hole 145 may correspondingly be circular. For the same reason, the terminal head 155 may likewise be cylindrical.

Therefore, the terminal pin 151 and terminal head 155 may be provided with a cylindrical shape, and the through hole 145 may be circular. Furthermore, the outer diameter of the terminal head 155 will be equal to or greater than the inner diameter of the through hole 145. Moreover, the vertical height of the terminal pin 151 will be greater than the vertical height of the terminal head 155 and the thickness of the current collector 140.

The terminal 150 may include a terminal head 151, a terminal pin 155, and a protrusion 159. The terminal head 151 and the terminal pin 155 may be connected to each other. The protrusion 159 may be connected to the terminal head 151 and the terminal pin 155. In an embodiment, the terminal head 151, the terminal pin 155, and the protrusion 159 may be manufactured as a single component. For example, the terminal head 151, terminal pin 155, and protrusion 159 may be manufactured by methods such as forging, extrusion, or casting.

Furthermore, the protrusion 159 may be positioned on the terminal head 151 within an area less than a reference distance centered on the terminal pin 155, corresponding to the location of the through-hole periphery 143, to press against the through-hole periphery 143.

Moreover, the free end of the terminal pin 155 extending from the terminal head 151 toward the cap plate 125 may protrude further upward beyond the cap plate 125. This is to electrically connect the electrode assembly 110 to the outside via the terminal pin 155.

In an embodiment, the current collector 140 may be coupled to the terminal 150 while in contact with the terminal head 151 and the protrusion 159.

For example, referring to FIG. 2a, the current collector 140 may be aligned on top of the terminal 150 so that the terminal pin 155 is inserted into the through hole 145. Subsequently, with the terminal pin 155 inserted into the through hole 145, the current collector 140 can be pressed vertically. At this time, the periphery 143 around the through hole can be pressed at high pressure by the press. Here, the vertical direction may be the -z-axis direction.

Referring to FIGS. 2a and 2b, as the current collector 140 is compressed with the terminal pin 155 inserted into the through hole 145, the current collector 140 may be joined to the terminal 150. Here, the crimping may deform the current collector 140 into a shape that engages with the terminal head 151 and the protrusion 159. No air gap may exist between the current collector 140 and the terminal 150. That is, the plate 141 and the periphery 143 around the through hole of the current collector 140 can be joined in a state closely fitted to the terminal head 151 and the protrusion 159.

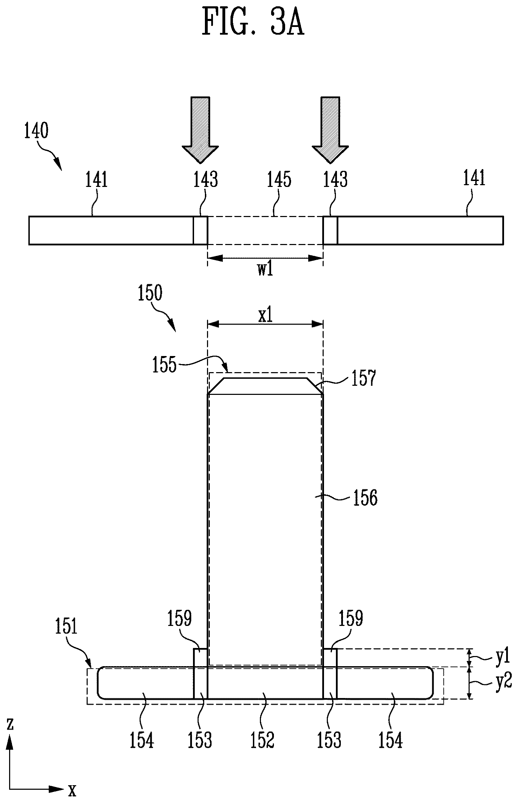

Fig. 3a and Fig. 3b are cross-sectional views illustrating the connection between the current collector and the terminal according to an embodiment.

Referring to FIGS. 3a and 3b, the terminal 150 may include a terminal head 151, a terminal pin 155, and a protrusion 159. In the embodiment, the top of the terminal head 151 and the bottom of the terminal pin 155 may be connected to each other. The protrusion 159 may be connected to the outer end of the terminal head 151 and the top of the terminal pin 155.

In an embodiment, the terminal head 151 may include a head center portion 152, an inner connection portion 153, and an outer connection portion 154.

The head center portion 152 may be positioned at the bottom of the terminal pin 155. For example, the top of the head center portion 152 may be connected to the bottom of the terminal pin 155. The inner connection portion 153 may be positioned at the outer end of the head center portion 152. In this case, the inner end of the inner connection portion 153 may be connected to the outer end of the head center portion 152. The outer connection portion 154 may be positioned at the outer end of the inner connection portion 153. For example, the inner end of the outer connection portion 154 may be connected to the outer end of the inner connection portion 153. Here, the outer end may indicate the end portion located in the outward direction relative to the center point c1.

In an embodiment, the terminal pin 155 may include a pin member 156 and a dog point 157.

The pin member 156 may be positioned at the top of the terminal head 151. For example, the bottom of the pin member 156 may be connected to the top of the head center portion 152 of the terminal head 151.

The pin member 156 may be the portion inserted into the through hole 145. For example, the shape of the pin member 156 may be cylindrical. In this case, the vertical cross-sectional shape of the pin member 156 may be circular. Here, the vertical cross-sectional shape denotes the shape of a cross-section taken in the vertical direction. For example, the vertical direction may be the z-axis direction.

The dog point 157 may be positioned at the top of the pin member 156. For example, the bottom of the dog point 157 may be connected to the top of the pin member 156. The dog point 157 may protrude in the vertical direction such that its horizontal length decreases. For example, the horizontal length may be the diameter. For example, the vertical direction may be the +z-axis direction. That is, the horizontal length of the dog point 157 may decrease from the bottom to the top. The dog point 157 may be the portion inserted into the through hole 145 before the pin member 156. The dog point 157 may function as a guide member facilitating insertion of the pin member 156 into the through hole 145.

In an embodiment, the vertical height y1 of the protrusion 159 may be less than the vertical height y2 of the terminal head 151. Here, the vertical height indicates the length in the vertical direction, which may be the z-axis direction.

The current collector 140 may include a plate 141, a periphery 143 around the through hole, and the through hole 145.

In the embodiment, the horizontal length w1 of the through hole 145 may be equal to or greater than the horizontal length x1 of the pin member 156. Here, the horizontal length w1, x1 may be a length or diameter in the horizontal direction. The horizontal direction may be the x-axis direction.

In a specific embodiment, referring to FIG. 3a, the current collector 140 may be aligned on the top of the terminal 150 so that the pin member 156 can be inserted into the through hole 145. Furthermore, with the terminal pin 155 inserted into the through hole 145, the periphery 143 of the through hole or the plate 141 may be compressed to bring the current collector 140 into close contact with the terminal head 151.

Referring to FIG. 3b, the bottom of the periphery 143 of the through hole in the current collector 140 and the bottom of the plate 141 may be joined to the top of the protrusion 159 and the top of the outer connecting portion 154, respectively, by the pressing. In this case, the shape of the current collector 140 may be deformed such that the top of the periphery 143 of the through hole is positioned higher than the top of the plate 141.

That is, the periphery 143 of the through hole may be deformed from a first state in which the current collector 140 forms a plane with the plate 141 while pressing the protrusion 159, to a second state in which at least a portion of the current collector protrudes toward the cap plate 125 when the current collector 140 presses the protrusion 159.

This occurs because as the current collector 140 approaches and contacts the protrusion 159, the protrusion 159 presses against the periphery 143 of the through hole. Stress concentrates on the periphery 143 of the through hole, allowing it to deform from the first state to the second state.

Meanwhile, referring to FIGS. 1b and 3b, the relative positions of the cap plate 125, the current collector 140, and the terminal 150 may be understood. Therefore, it can be seen that the terminal 150 contacts the current collector 140 but is spaced apart from the cap plate 125.

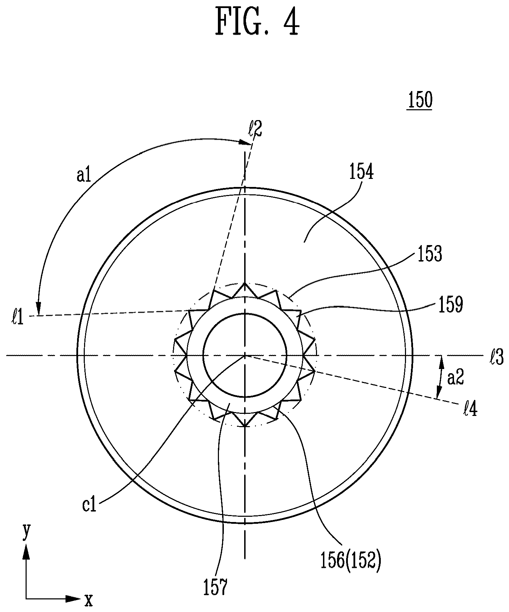

FIG. 4 is a plan view of the terminal according to an embodiment. FIG. 4 shows a plan view of the terminal 150 in FIGS. 2a and 3a viewed from the top downward.

Referring to FIG. 4, in an embodiment, the vertical cross-sectional shape of the terminal pin 155 may be circular. Here, the vertical cross-section refers to a cross-section in the vertical direction, and the vertical direction may be the z-axis direction. For example, the shape of the vertical cross-section of the terminal pin 155 may be a circle having a first reference diameter x1 based on a center point c1. In the embodiment, the shape of the through hole 145 of the current collector 140 may be a circle having a second reference diameter equal to or greater than the first reference diameter x1.

In an embodiment, the protrusion 159 may be arranged in a plurality on the inner connecting portion 153. Here, the protrusions 159 may be arranged to surround the outer end of the terminal head 151. That is, the protrusions 159 may be connected to the outer end of the terminal head 151 and the upper part of the inner connecting portion 153.

In an embodiment, the shape of vertical cross-section of the protrusions 159 may be triangular or rounded triangular. Here, the vertical cross-section refers to a cross-section in the vertical direction, which may be the z-axis direction. A triangle or rounded triangle may be a shape having three vertices. A rounded triangle may be defined as a triangle where at least one of the three edges is composed of a curve.

In an embodiment, the protrusion 159 may include a first and a second protrusion adjacent to each other. In an embodiment, in a vertical cross-section of the terminal 150, the angle a1 between the first line 11 and the second line 12 of the first protrusion and the second protrusion, respectively, may be greater than the angle a2 between the third line 13 connecting the center point c1 of the terminal 150 and the base peak of the first protrusion, and the angle a2 between the fourth line 14 connecting the center point c1 of the terminal 150 and the top peak of the first protrusion. Here, the first line 11 and the second line 12 may be adjacent edges. The third line 13 may be a line connecting a vertex corresponding to the base of the protrusion and the center point c1. Here, the fourth line 14 may be a line connecting a vertex corresponding to the top of the same projection and the center point c1.

Meanwhile, the battery cell 100 according to this disclosure can be utilized in a battery assembly (not shown), such as a battery module, battery pack, and energy storage system. That is, the battery assembly may include the battery cell 100 and an accommodating space (not shown) that accommodates the battery cell 100. The accommodating space may be formed by a housing or frame.

For example, the accommodating space may accommodate a plurality of battery cells 100.

## Claims

1. A battery cell comprising:
a case body having an open side and at least one cap plate coupled to the case body to close the open side;
an electrode assembly accommodated within the case; and
a terminal assembly coupled to the at least one cap plate;
wherein the terminal assembly includes:
a current collector electrically connected to the electrode assembly and having a through hole formed therein;
a terminal head positioned opposite the direction in which the cap plate is located relative to the current collector;
a terminal pin extending from the terminal head toward the cap plate and inserted into the through hole; and
a protrusion extending from the terminal head toward the cap plate, connected to an outer surface of the terminal pin, and contacting the current collector together with at least a portion of the terminal head.

2. The battery cell according to the claim 1, wherein the current collector, after the terminal pin is inserted through the through hole, is pressed toward the protrusion comes into contact with the protrusion and the terminal head.

3. The battery cell according to the claim 1, wherein the length of the protrusion extending toward the cap plate relative to the terminal head is less than the vertical height of the terminal head.

4. The battery cell according to the claim 1, wherein the protrusion is provided in a plurality, and the plurality of the protrusions are arranged at preset intervals along the circumference of the terminal pin.

5. The battery cell according to the claim 1, wherein the terminal head includes a head center portion connected to the terminal pin, an inner connection portion connected to the outer end of the head center portion, and an outer connection portion connected to the outer end of the inner connection portion, and the protrusion is arranged in a plurality on the inner connection portion.

6. The battery cell according to the claim 5, wherein the shape of the vertical cross-section of the protrusion is triangular or rounded triangular.

7. The battery cell according to the claim 6, wherein the protrusion includes a first protrusion and a second protrusion adjacent to each other, and
the angle between adjacent edges of the first protrusion and the second protrusion in the vertical cross-section of the terminal is greater than an angle between a first line connecting the center point of the terminal and the base peak of the first protrusion and a second line connecting the center point of the terminal and the top peak of the first protrusion in the vertical cross-section of the terminal.

8. The battery cell according to the claim 5, wherein the shape of the vertical cross-section of the terminal pin is circular.

9. The battery cell according to the claim 5, wherein the terminal pin includes a pin member connected to the top of the head center portion, and a dog point connected to the top of the pin member and protruding vertically to reduce the horizontal length.

10. The battery cell according to the claim 1, wherein the terminal pin and terminal head are provided in a cylindrical shape, and the through hole is provided in a circular shape corresponding to the shape of the terminal pin, and the outer diameter of the terminal head is equal to or greater than the inner diameter of the through hole.

11. The battery cell according to the claim 1, wherein the current collector further includes a board-shaped plate including the through hole and a periphery of the through hole located within a predetermined reference distance from the through hole on the plate,
wherein the periphery of the through hole protrudes toward the cap plate relative to the plate when the terminal head contacts with the plate.

12. The battery cell according to the claim 11, wherein the terminal pin is provided in a cylindrical shape, and the protrusion is located within an area at or below the reference distance from the terminal head relative to the terminal pin.

13. The battery cell according to the claim 11, wherein the periphery of the through hole is deformed from a first state in which the current collector forms a plane with the plate before pressing the protrusion to a second state in which at least a portion of the current collector protrudes toward the cap plate when the current collector presses the protrusion.

14. The battery cell according to the claim 1, wherein a free end of the terminal pin is located above the position of the cap plate relative to the current collector.

15. The battery cell according to the claim 1, further comprising:
an insulator for spacing the current collector, the terminal head, and the terminal pin from the electrode assembly and the case.

16. A battery assembly comprising:
a battery cell of claim 1; and
an accommodating space for accommodating the battery cell.
